# EUROPÄISCHE PATENTANMELDUNG

(11) **EP 3 232 370 A1**
(43) Veröffentlichungstag der Anmeldung: **18.10.2017**
(21) Anmeldenummer: 16205262.5
(22) Anmeldetag: 20.12.2016
(51) Int. Cl.: G06K 9/00, G06K 9/62

(54) **VERFAHREN ZUR ERKENNUNG VON GEDRUCKTEN TEXTEN AUF DOKUMENTEN**

(30) Priorität: 15.04.2016 DE 102016004549
(71) Anmelder: NOVENTI GmbH, 81673 München (DE)
(72) Erfinder: Kopitsch, Friedrich, 81739 München (DE); Glücker, Raimund, 90552 Röthenbach (DE)
(74) Vertreter: Frick, Robert

(57) **Zusammenfassung**

Die Erfindung betrifft ein Verfahren zu Erkennung von gedruckten Texten auf Dokumenten und insbesondere auf Rezepten, wobei zuanächst eine Rastergraphik des Dokuments erstellt wird, wobei die Rastergraphik zwei- oder mehrfach durch Verwendung unterschiedlicher Sets an Binarisierungsparametern auf unterschiedliche Weise binarisiert wird, um wenigstens zwei unterschiedliche Binärbilder zu erstellen, wobei alle Binärbilder separat einer Texterkennung unterzogen und die Ergebnisse auf der Grundlage wenigstens eines Bewertungsparameters bewertet werden und wobei auf der Grundlage der Bewertung ein Binärbild ausgewählt wird, auf dessen Grundlage ein Endergebnis erstellt wird.

## Beschreibung

Die Erfindung betrifft ein Verfahren zu Erkennung von gedruckten Texten auf Dokumenten und insbesondere auf Rezepten.

Bei Rezepten handelt es sich um ärztliche Verordnungen von Arznei- oder Heilmitteln in Papierform. Sie umfassen vorgedruckte Texte und individuell zu bedruckende Textfelder, in die bei Ausstellung des Rezepts beispielsweise Patientendaten (Name etc.), Arztdaten (Arztnummer etc.), das Datum der Ausfertigung und eine Verordnung, d.h., eine Bezeichnung des verschriebenen Arznei- oder Heilmittels gedruckt werden. Auf der Grundlage eines Rezepts erhält ein Patient in einer Apotheke oder einem Behandlungszentrum die verordneten Mittel. Die Abrechnung erfolgt entweder direkt mit dem Patienten oder mit einer Krankenkasse bzw. -versicherung.

Zur Vereinfachung der Arbeitsabläufe in Apotheken und Behandlungszentren ist ein automatisches Einlesen der auf die Rezepte gedruckten Informationen wünschenswert. Zu diesem Zweck ist es erforderlich, die auf die Rezepte gedruckten Texte möglichst fehlerfrei zu erkennen, d.h., die dargestellten Zeichen automatisch zu identifizieren und ihnen einen Zahlenwert zuzuordnen, der ihnen nach einer üblichen Textcodierung zukommt. Der Text ist oftmals jedoch schwach, nicht einheitlich stark, auf farbigem Hintergrund und/oder nicht genau an die vorgesehene Position gedruckt, was eine Texterkennung erschwert. Insbesondere bei der Erkennung der Verordnung ergeben sich durch die Verwendung unterschiedlicher Drucker und Schriftarten in den einzelnen Arztpraxen Probleme, da die Texterkennungsparameter nicht für alle Drucktypen und Schriftarten optimiert sein können.

Aufgabe der Erfindung ist es, ein Verfahren anzugeben, mit dem auch unter diesen Voraussetzungen eine möglichst fehlerfreie Texterkennung von Informationen auf Dokumenten und insbesondere Verordnungen auf Rezepten erfolgen kann.

Die Anwendung des erfinderischen Verfahrens ist nicht auf Rezepte oder gar deren Verordnungen beschränkt. Das Verfahren kann auch in der Erkennung gedruckter Texte auf anderen Dokumenten verwendet werden, was insbesondere dann sinnvoll sein kann, wenn dort dieselben erschwerenden Voraussetzungen für eine fehlerfreie Texterkennung vorliegen.

Vor diesem Hintergrund betrifft die Erfindung ein Verfahren zu Erkennung von gedruckten Texten auf Dokumenten und insbesondere zur Erkennung von gedruckten Verordnungen auf Rezepten, wobei zunächst eine Rastergraphik des Dokuments erstellt wird, wobei die Rastergraphik zwei- oder mehrfach durch Verwendung unterschiedlicher Sets an Binarisierungsparametern auf unterschiedliche Weise binarisiert wird, um wenigstens zwei oder mehr unterschiedliche Binärbilder zu erstellen, wobei alle Binärbilder separat einer Texterkennung unterzogen und die Ergebnisse auf der Grundlage wenigstens eines Bewertungsparameters bewertet werden und wobei auf der Grundlage der Bewertung ein Binärbild ausgewählt wird, auf dessen Grundlage ein Endergebnis erstellt wird.

Gedruckte Texte umfassen Schriftzeichen wie beispielsweise Buchstaben, Ziffern und Sonderzeichen in einer oder mehreren Schriftarten. Vorzugsweise sind einzelne Zeichen in den zu erkennenden Texten unter Einhaltung von Abständen aneinandergereiht und somit nicht wie bei etwa handschriftlichen Texten verbunden. Das erfindungsgemäße Verfahren eignet sich für die Erkennung von maschinengedruckten Texten.

Die Rastergraphik wird anhand eines optischen Eingabegerätes erstellt. Geeignete optische Eingabegeräte umfassen Scanner und Digitalkameras, aber auch beispielsweise Faxempfänger. Typischerweise ist die Rastergraphik farbig, d.h., weist Bildpunkte unterschiedlicher Färbung auf. Die Dateistruktur der Rastergraphik umfasst mehrere Ebenen, die jeweils einer bestimmten Farbe zugeordnet sind, und in denen einzelne Punkte besetzt sind und andere nicht besetzt sind. Die Farbe eines Bildpunktes der Rastergraphik ergibt sich aus der Mischung jener Farben, die den besetzten Punkten an gleicher Stelle in allen Ebenen entsprechen.

Unter einer Binarisierung ist der Vorgang zu verstehen, bei dem die Rastergraphiken in Binärbilder umgewandelt werden, die nur mehr eine Ebene aufweisen, in der die Bildpunkte eine der zwei Farben Schwarz und Weiß annehmen können. Jeder Bildpunkt des gesamten und nur eine Ebene aufweisenden Binärbilds kann also mit einem Bit gespeichert werden. Die Kodierung der Pixel erfolgt meist mit dem Wert 0 für Schwarz und 1 für Weiß, der umgekehrte Fall existiert allerdings auch.

Im Rahmen des erfindungsgemäßen Verfahrens wird also ein und dieselbe gescannte Rastergraphik auf mehrere unterschiedliche Arten unter Zugrundelegung unterschiedlicher Sets an Binarisierungsparametern binarisiert. Binarisierungsparameter können die Gewichtung der Bildpunkte der unterschiedlichen Ebenen der Rastergraphik, die Berücksichtigung oder Nichtberücksichtigung der Bildpunkte der unterschiedlichen Ebenen der Rastergraphik, einen Verstärkungsgrad oder einen Abschwächungsgrad für einzelne Bildpunkte und/oder einen Clusterbildungsgrad für einzelne Bildpunkte umfassen. Beispielsweise können Ebenen, die einer bestimmten Farbe zugeordnet sind, nur schwach oder gar nicht berücksichtigt werden, was bei der Erkennung von Texten vorteilhaft sein kann, die auf einem farbigen Hintergrund gedruckt wurden. Dies ist beispielsweise bei Verordnungen oft der Fall, da die Verordnungsfelder unterschiedlicher Rezepttypen oft unterschiedliche Farbgrundierungen aufweisen.

In einer Ausführungsform wird die Rastergraphik drei bis fünf und vorzugsweise drei oder vier Mal auf unterschiedliche Weise binarisiert, um eine entsprechende Zahl unterschiedlicher Binärbilder zu erstellen. Diese Anzahl hat sich in der Erprobung der Erfindung als optimal erwiesen. Eine geringere Anzahl an unterschiedlichen Binarisierungen lieferte oftmals schlechtere Ergebnisse, während eine höhere Anzahl in der Regel keinen Mehrwert mehr gebracht hat.

In einer Ausführungsform werden die Rastergraphik und/oder das Binärbild mit wenigstens 200 dpi, vorzugsweise mit zwischen 250 und 350 dpi und weiter vorzugsweise mit ungefähr 300 dpi erstellt. Diese Anzahl hat sich in der Erprobung der Erfindung als optimal erwiesen. Eine geringere Auflösung lieferte oftmals schlechtere Ergebnisse, während eine höhere Anzahl in der Regel keinen Mehrwert mehr gebracht und den Scan-, Erkennungs- und nachfolgenden Verarbeitungsvorgang nur verlängert hat. Vorzugsweise ist die Auflösung des Binärbilds identisch zur Auflösung der Rastergraphik.

In einer Ausführungsform umfassen die Bewertungsparameter einen oder mehrere der folgenden Parameter: Anzahl der erkannten Schriftzeichen, Anzahl der nicht lesbaren Zeichen, Zuordnungsgrad erkannter Begriffe, Übereinstimmung korrespondierender Schriftzeichen in den einzelnen Ergebnissen und Übereinstimmung erkannter und gegebenenfalls zugeordneter Begriffe in den einzelnen Ergebnissen. Nicht lesbare Zeichen sind in der Texterkennung unter dem Begriff der Reject-Zeichen bekannt.

Zur Ermittlung des Zuordnungsgrades werden erkannte Begriffe mit einer Datenbank bekannter Begriffe abgeglichen. In einer Ausführungsform wird eine Übereinstimmung mit einem bekannten Begriff nur bei identischer Übereinstimmung angenommen. Alternativ kann eine Übereinstimmung nur oder auch bereits bei einem definierten Ähnlichkeitsscore angenommen werden, wobei in diesem Fall vorgesehen sein kann, dass im Rahmen des Abgleichs auch eine Korrektur des jeweiligen Begriffs im einzelnen Ergebnis erfolgt. In einer Ausführungsform umfasst die Datenbank Namen von Arznei- und/oder Heilmitteln. So können Verordnungen, d.h., auf dem Rezept wiedergegebene Arznei- oder Heilmittelbegriffe für den Abgleich verwendet werden.

Eine Übereinstimmung korrespondierender Schriftzeichen oder Begriffe liegt dann vor, wenn in unterschiedlichen Ergebnissen an einer identischen Position ein identisches Schriftzeichen oder ein identischer oder ähnlicher Begriff erkannt wurde. Wird beispielsweise bei insgesamt vier Ergebnissen in zweien an einer Stelle ein identischer Begriff erkannt, in einem weiteren kein zuordenbarer Begriff und in einem weiteren kein lesbarer Text, so trägt dies zu einer hohen Gewichtung der beiden Ergebnisse insgesamt oder zumindest des jeweiligen Teils der beiden Ergebnisse bei der Erstellung des Endergebnisses bei.

In einer Ausführungsform wird nur ein Teilergebnis auf der Grundlage wenigstens eines Bewertungsparameters bewertet, wobei das Teilergebnis aus der Texterkennung für lediglich eine Teilfläche der Binärbilder, vorzugsweise für lediglich den Verordnungsteil eines Rezepts erhalten wird, und dass auf dieser Grundlage das Binärbild zur Erstellung des Endergebnisses ausgewählt wird. Beispielsweise werden lediglich die erkannten Texte des Verordnungsteils eines Rezepts bewertet, obwohl auch für die verbleibenden Teile des Dokuments, also für beispielsweise den Arzt- und Versichertenteil eine Texterkennung durchgeführt wird. Für die verbleibenden Teile, beispielsweise den Arzt- und Versichertenteil kann dann dasjenige Ergebnis in das Endergebnis übernommen werden, das zu dem am besten bewerteten Verordnungsteil gehört.

In einer Ausführungsform wird vor den Binarisierungen ein Dokumententyp identifiziert und die Wahl der für die einzelnen Binarisierungen verwendeten Sets an Binarisierungsparametern erfolgt auf der Grundlage des identifizierten Dokumententyps. Beispielsweise kann aufgrund des Auslesens eines Codes wie beispielsweise einer Stuhlnummer eines Rezepts der Rezepttyp identifiziert werden. Je nach dem Dokumenttyp kann nun ein bestimmtes Set an Binarisierungsparametern ausgewählt werden. Beispielsweise können bei Erkennung eines Kassenrezepts, dessen Verordnung auf roten Untergrund gedruckt ist und dessen Begrenzungslinien ebenfalls rot sind, ein oder mehrere solche Sets an Binarisierungsparametern gewählt werden, in denen wenigstens jene Ebenen der Rastergraphik, die dem roten Farbspektrum zugeordnet sind, bei der Binarisierung nicht berücksichtigen werden. Auch die Behandlung der Bildpunkte verbleibenden Ebenen in ein oder mehreren Sets kann auf der Grundlage des Rezepttyps optimiert werden.

Denkbar ist auch, dass die Bewertung der Ergebnisse für einzelne Teilflächen erfolgt und bei der Erstellung des Endergebnisses für unterschiedliche Teilflächen des Dokuments unterschiedliche Binärbilder ausgewählt werden.

In einer Ausführungsform erfolgt nach der Zusammenführung der Ergebnisse ein Abgleich erkannter Begriffe mit einer Datenbank bekannter Begriffe, wobei eine Übereinstimmung bereits bei einem definierten Ähnlichkeitsscore angenommen wird und wobei dann eine Korrektur des jeweiligen Begriffs erfolgt.

In einer Ausführungsform werden wenigstens ein und vorzugsweise alle Sets an Binarisierungsparametern so gewählt werden, dass wenigstens eine bestimmte Ebene der Rastergraphik, die einen Anteil an der Darstellung einer bestimmten Farbe in der Rastergraphik hat, bei der Binarisierung nicht berücksichtigt wird. Bildpunkte einer Farbe, die beispielsweise als Grundierung für das Verordnungsfeld eines Rezepts verwendet wird (im Falle eines deutschen Kassenrezepts derzeit rot), können auf diese Weise bei der Binarisierung ausgeschlossen werden, um ein besseres Ergebnis zu erhalten. Oftmals entspricht eine Farbe in der Rastergraphik übereinstimmenden Punktbelegungen in mehreren Ebenen der Rastergraphik, wobei je nach Farbe vorgesehen sein kann, eine oder mehrere der Punkte der entsprechenden Ebenen nicht zu berücksichtigen.

Das Dokument wird zur Erstellung der Rastergraphik typischerweise automatisch in ein optisches Eingabegerät eingezogen. Sofern das Dokument dabei nicht korrekt eingezogen wird, kann die Rastergraphik ein gestauchtes oder falsch positioniertes Bild des Dokuments zeigen. Ein gestauchtes Bild kann die Texterkennung behindern und ein falsch positioniertes Bild kann, beispielsweise beim Scannen von Rezepten, wo bestimmte Informationen an einer bestimmten Stelle erwartet werden (beispielsweise Verordnungen in einem Verordnungsfeld erwartet werden), ebenfalls die Texterkennung oder die Verwendung der erkannten Informationen beeinträchtigen.

Um dieses mögliche Problem zu umgehen, ist in einer Ausführungsform der Erfindung vorgesehen, dass vor den Binarisierungen bewertet wird, ob die Rastergraphik Bildabschnitte aufweist, die das Dokument nicht zeigen, und wobei solche Bildabschnitte, sofern vorhanden, vor den Binarisierungen aus der Rastergraphik entfernt werden. Beispielsweise kann die Rastergraphik zumindest an einem Rand einen schwarzen bzw. inhaltslosen Streifen aufweisen. Dieser würde in der vorliegenden Ausführungsform erkannt und vor den Binarisierungen aus der Rastergraphik entfernt werden.

In einer Ausführungsform werden dabei Bildabschnitte, die das Dokument zeigen, nach Entfernung der anderen Bildabschnitte und vor den Binarisierungen verschoben und/oder gestreckt. Die Verschiebung bzw. Streckung erfolgt vorzugsweise so, dass der Bildabschnitt des Dokuments so verschoben wird, dass er nach Streckung zumindest einen Teil der Fläche der Rastergraphik einnimmt, die zuvor vom entfernten Bildabschnitt eingenommen wurde, und dass der Bildabschnitt des Dokuments dann gestreckt wird, bis ein vorgegebenes Verhältnis von Breite zu Höhe erreicht wurde.

In einer Ausführungsform kann auch eine Drehung des Bildabschnittes vorgesehen sein.

Auch oder zusätzlich kann das Rezept in der Rastergraphik nicht richtig positioniert sein und dies kann zu einem schwarzen Streifen an einem Rand der Rastergraphik führen. In diesem Fall würde im Rahmen der vorliegenden Ausführungsform vor den Binarisierungen der Rastergraphik sowohl der schwarze Streifen entfernt und die Abbildung des Rezepts innerhalb der Rastergraphik so verschoben, dass zumindest ein Teil der Fläche eingenommen wird, die zuerst vom schwarzen Streifen eingenommen wurde.

Die Erfindung betrifft ferner eine Vorrichtung zur Erkennung gedruckter Texte auf Dokumenten und insbesondere zur Erkennung von Verordnungen auf Rezepten mit einem optischen Eingabegerät und mit einer Steuereinheit, die ausgebildet ist, ein erfindungsgemäßes Verfahren durchzuführen.

Die Vorrichtung kann eine Recheneinheit mit einer Datenbank oder eine Kommunikationseinheit zur Verbindung mit einer derartigen Recheneinheit aufweisen, um einen Abgleich von Begriffen und/oder eine weitere Nutzung der anhand des Verfahrens ausgelesenen Informationen zu ermöglichen.

Das erfindungsgemäße Verfahren kann beispielsweise an einem Gerät angewendet werden, wie es in der DE 10 2013 012 925 A1 offenbart wird.

Weitere Einzelheiten und Vorteile der Erfindung ergeben sich aus dem nachfolgend anhand der Figuren beschriebenen Ausführungsbeispiel. In den Figuren zeigen:
- Figur 1:: eine Abbildung eines Rezepts;
- Figur 2:: ein Flussdiagramm eines erfindungsgemäßen Verfahrens;
- Figur 3: eine Abbildung einer Rastergraphik des Rezepts gemäß Figur 1;
- Figur 4:: Abbildungen unterschiedlicher Binärbilder, die auf der Grundlage der Rastergraphik der Figur 3 unter Verwendung unterschiedlicher Sets an Binarisierungsparametern erstellt wurden; und
- Figur 5:: Abbildungen unterschiedlicher Rastergraphiken, in denen ein Bildabschnitt zunächst verschoben und dann gestreckt wird.

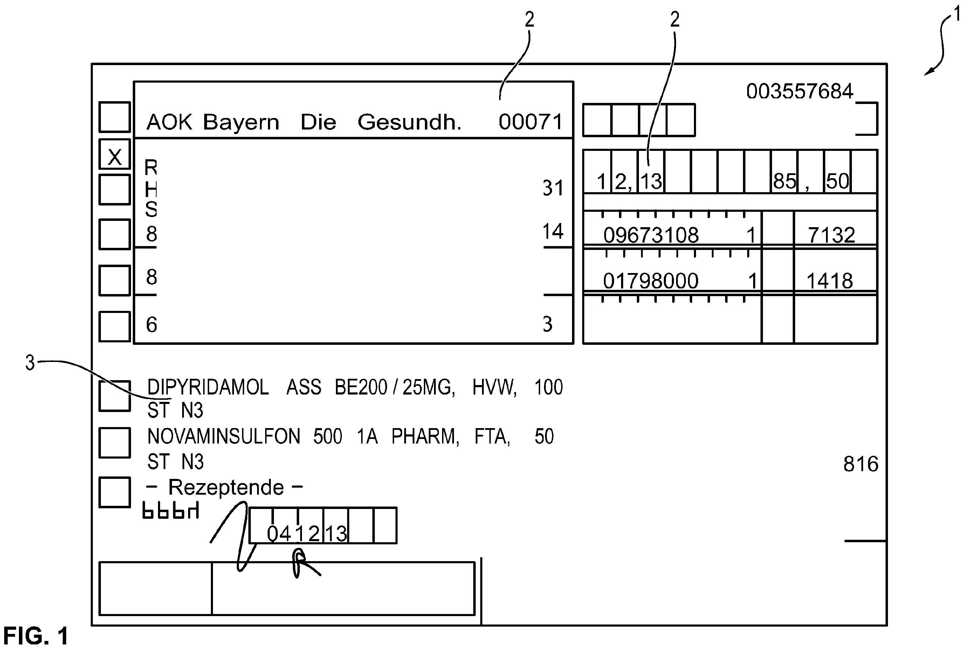

Das Zielobjekt der Erkennung im Rahmen des beschriebenen Ausführungsbeispiels ist das in Figur 1 dargestellte Rezept, das allgemein mit dem Bezugszeichen 1 gekennzeichnet ist. Es umfasst mehrere Textfelder 2, unter anderem ein Textfeld 3 für die Verordnungen. In der Praxis kommen Druckversatz, Schiefdruck, handschriftliche Veränderungen und dergleichen vor. Das Verfahren zielt darauf ab, auch in Anbetracht dieser Abweichungen von der Idealdarstellung eine optimale Texterkennung zu gewährleisten.

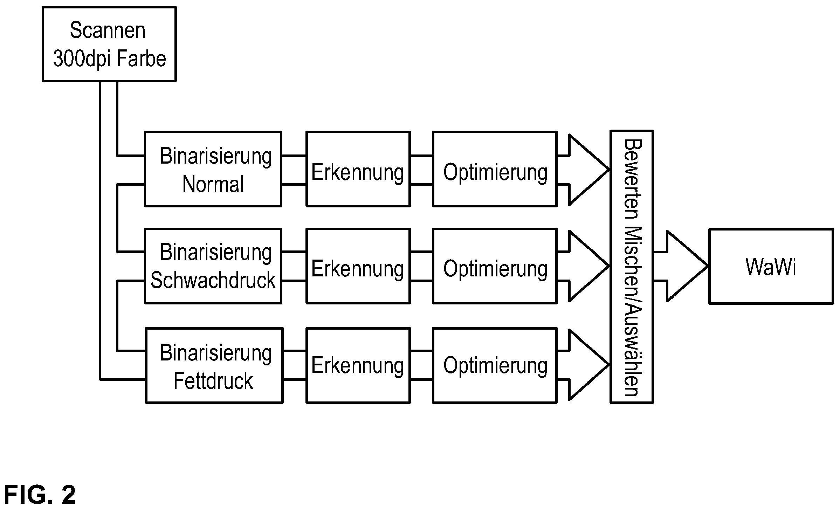

In Figur 2 wird ein Flussdiagramm eines erfindungsgemäßen Verfahrens gezeigt.

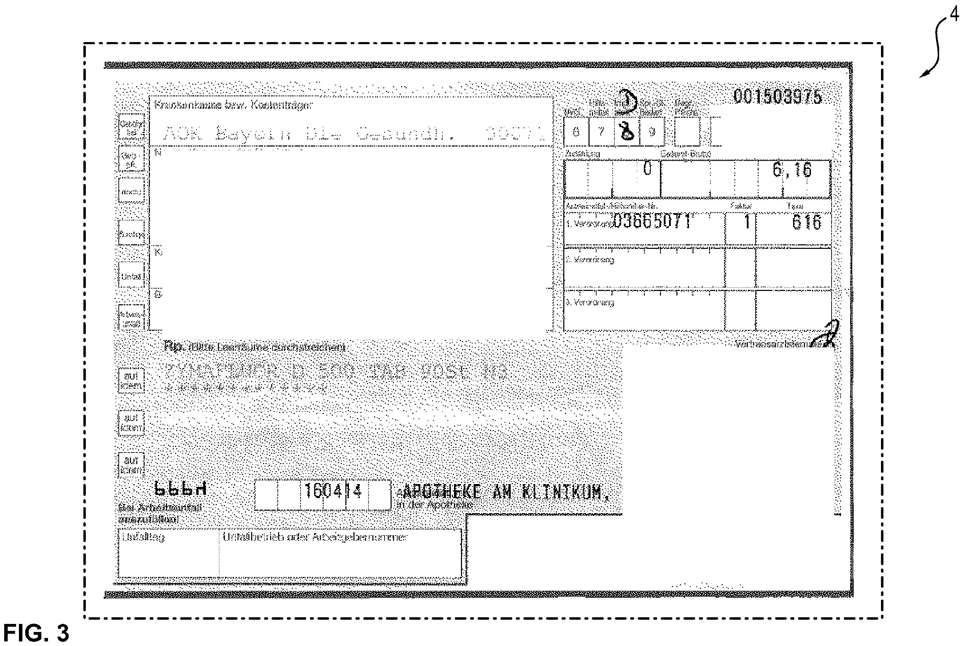

In einem ersten Schritt kommt es zu einem farbigen Scan des Rezepts mit einer Auflösung von 300 dpi, um ein Farbbild zu erhalten, das in Figur 3 dargestellt und mit dem Bezugszeichen 4 gekennzeichnet ist.

Anschließend kommt es im Beispiel zu drei unterschiedlichen Binarisierungen desselben Farbbildes und somit zu einer Parallelisierung einiger Verarbeitungsstufen. Die Binarisierung erfolgt im vorliegenden Ausführungsbeispiel jeweils mit dem Programm ImageMagick, einem freien Softwarepaket zur Erstellung und Bearbeitung von Rastergrafiken, und zwar unter Nutzung des *"convert"* bzw. "*mogrify*"-Kommandos mit der folgenden Struktur:
mogrify -format tif -path Zielpfad -brightness-contrast -15x100 -threshold 10% -units PixelsPerlnch -density 300 *.bmp

Die "-15" stellt hierbei einen Binarisierungsparameter dar, der ausgehend von einer "00" Referenz einen bestimmten Verstärkungsgrad von Bildpunkten einzelner Ebenen der Rastergraphik für die Erstellung des Binärbildes angibt.

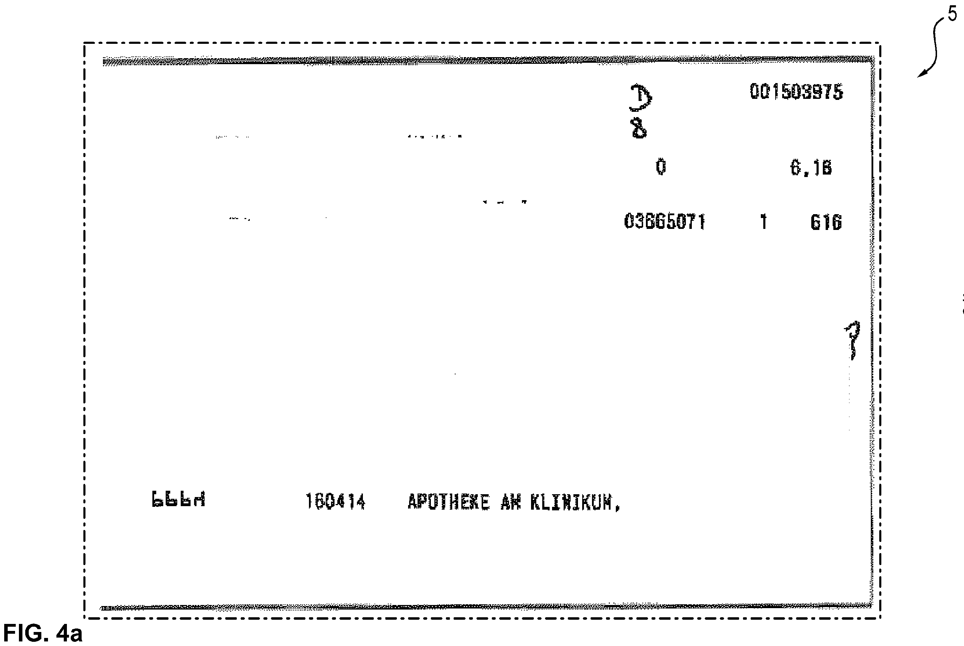

Die so erhaltenen unterschiedlich binarisierten Bilder sind in den Figuren 4a-c dargestellt und mit den Bezugszeichen 5-7 gekennzeichnet.

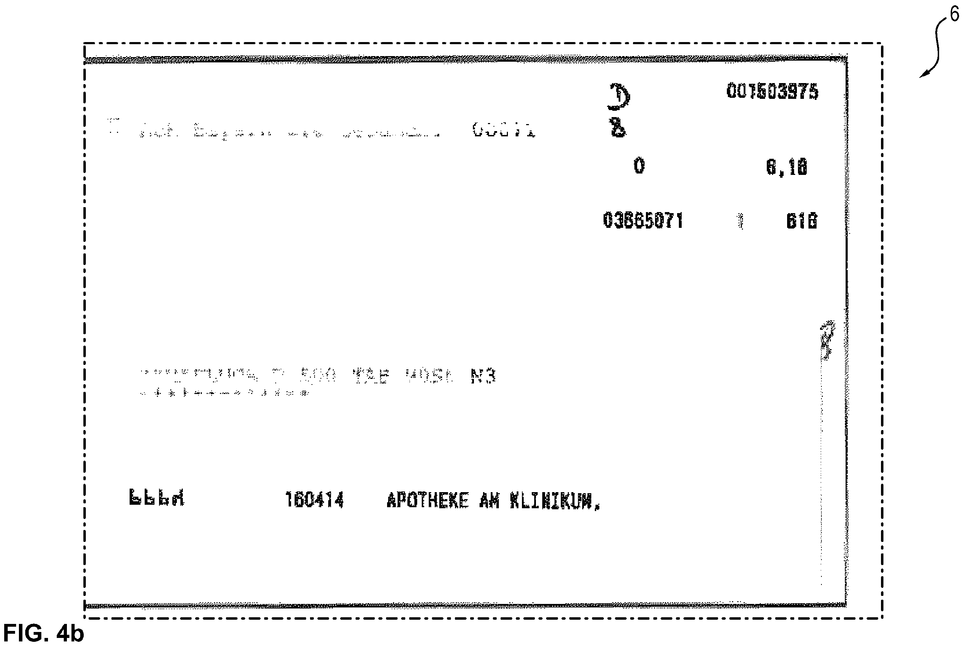

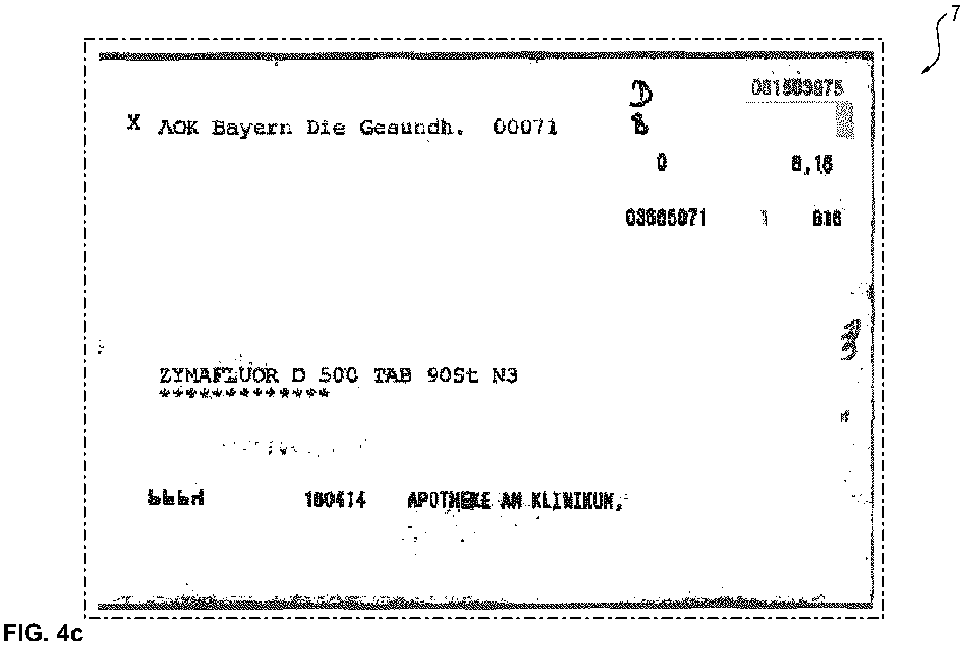

Durch die unterschiedliche Binarisierung können in einigen Bildern (vgl. Fig. 4a) besonders stark gedruckte Texte, in anderen Bildern (vgl. Fig. 4c) besonders schwach gedruckte Texte, und in wiederum anderen Bildern (vgl. Fig. 4b) normal gedruckte Texte gut erkannt werden.

Die parallel ablaufenden Erkennungs- und Optimierungsstufen liefern zunächst jede für sich je Verordnung ein Ergebnis oder im Falle einer schlechten Erkennung gegebenenfalls für einzelne Verordnungen kein Ergebnis. Dies wird bei der Bewertung der einzelnen Ergebnisse derart genutzt, dass jene Binarisierungsstufen, die für alle Verordnungen auch ein Ergebnis liefern, stärker in das Gesamtergebnis eingehen. Weitere Bewertungsparameter sind unter anderem die Anzahl der nicht lesbaren Zeichen (Reject-Zeichen) und vor allem, ob mit dem Artikelnamen ein Medikament in den Stammdaten gefunden werden kann.

Für die reine OCR-Erkennung wurde im konkreten Fall der Erkennungs-Kernel kadmos der Firma reRecognition GmbH eingesetzt.

Sollten die Dokumente (Rezepte) beim Scannen nicht korrekt eingezogen werden und ein gestauchtes Farbbild entstehen, wird durch Ermittlung der Breite des im Allgemeinen entstandenen schwarzen Bildteils am oberen Rand, ebenfalls mit Unterstützung des Programms ImageMagick, das Bild in die ursprüngliche Größe bei gleichbleibender Auflösung und Position der Felder wie im Fall des korrekten Scannens überführt. Dadurch wird der Rezepttyp, die korrekte Binarisierung abhängig vom Rezepttyp und die anschließende Verarbeitung wie beschrieben, ermöglicht. Mittels der nachfolgenden Kombination von ImageMagick-Kommandos kann der schwarze Rand (im Beispiel mit Breite von 65 pixel) entfernt werden:
mogrify -format jpg -path ....\ohne_schw_Balken -page +0-65 -background none -flatten -units PixelsPerlnch -density 300 *.bmp
und
mogrify -format bmp -path ... \schw_Balken\korrigiert -crop 1748x1228 - density 300 -units PixelsPerlnch *.jpg

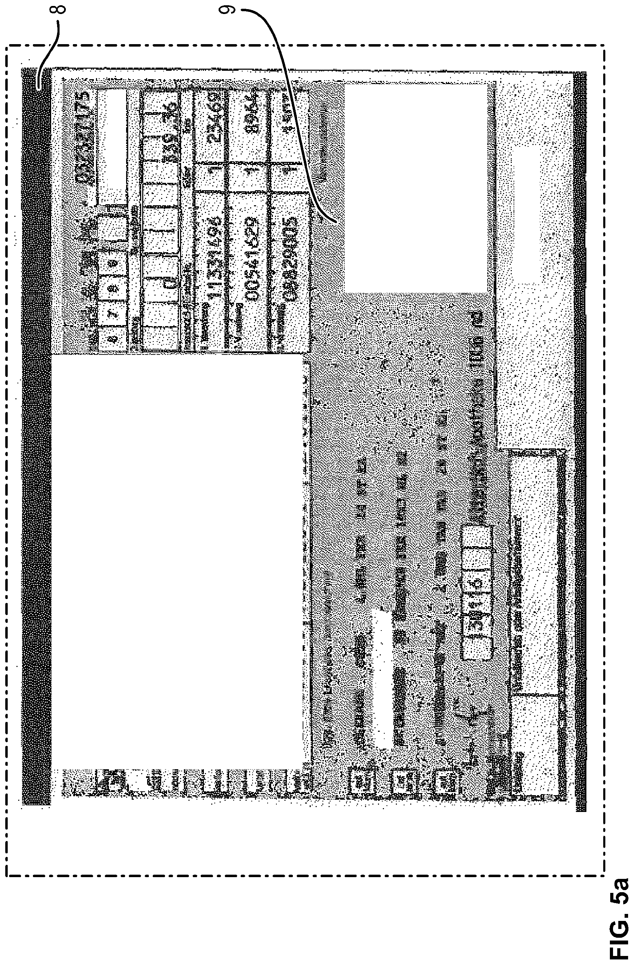

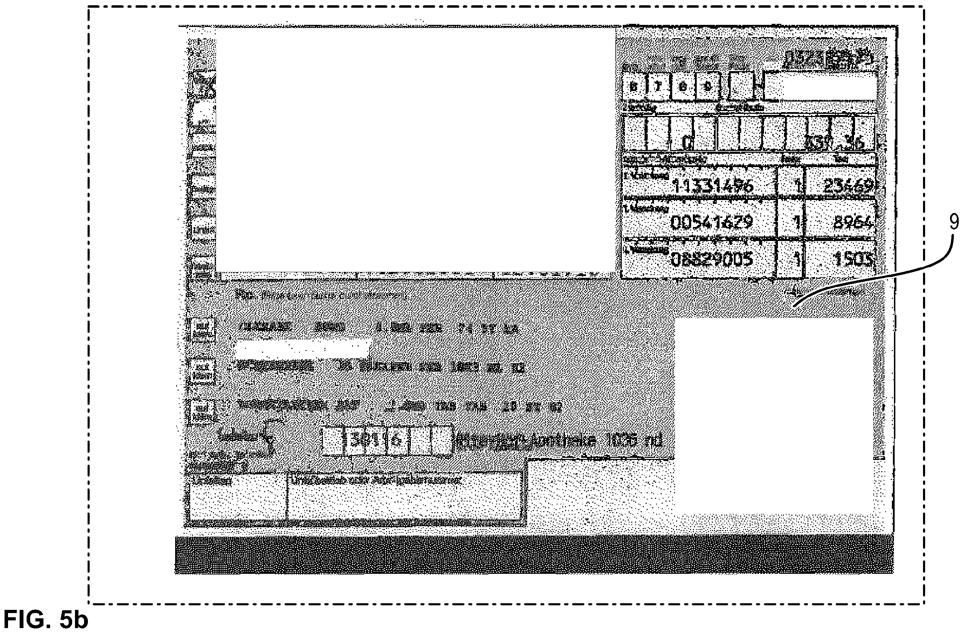

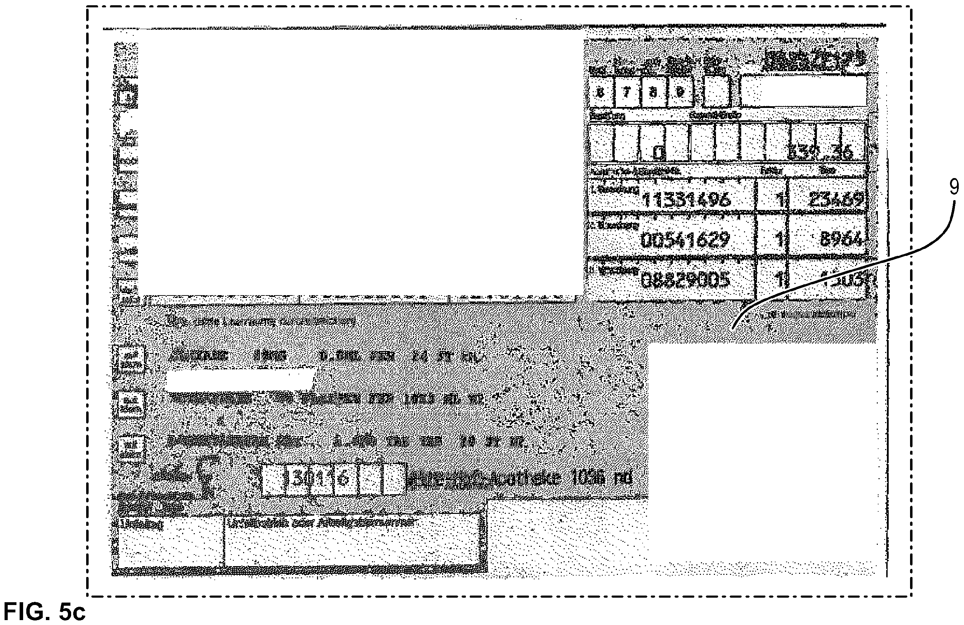

Figur 5a zeigt eine Rastergraphik, die aufgrund eines Scans erstellt wurde und noch unbehandelt ist. Figur 5b zeigt diese Rastergraphik nach Entfernung des schwarzen Streifens 8 oberhalb des Bildabschnitts 9, der das Rezept zeigt. Figur 5c zeigt diese Rastergraphik nach Streckung des Bildabschnitts 9 derart, dass er ein vorgegebenes Bildformat einnimmt, das zu dem Verhältnis der Kantenlängen des Rezepts korrespondiert.

Am Beispiel der Erkennungslösung für das Apotheken-Rezept gemäß Figur 1 wurde das beschriebene Verfahren erfolgreich erprobt. Die Kombination dieser Technologien ist jedoch nicht auf diesen Einsatzfall beschränkt.

Ein möglicher Ablauf des erfindungsgemäßen Verfahrens umfasst daher das Scannen von Farbbildern, vorzugsweise 300 dpi, das Erkennen des Rezepttyps anhand einer spezifischen Markierung am Rezept, die Umwandlung der Farbbilder in schwarz-weiß Bilder mit unterschiedlicher Binarisierung abhängig vom Rezepttyp, die nachfolgend parallele (feld- bzw. zeilenweise) Erkennung der unterschiedlich binarisierten Bilder, die Feststellung des Anfangs einer weiteren Verordnung für den Fall mehrerer Verordnungen auf einem Rezept (es können bis zu 3 Verordnungen auf einem Rezept stehen), die anschließende Analyse der ein- bzw. mehrzeiligen Verordnungstexte, die Optimierung der Ergebnisse der Verordnungsanalyse, u.a. Eliminierung von Erkennungsfehlern und die Auswahl des besten Ergebnisses aus den parallelen Verarbeitungen.

Das erfindungsgemäße Verfahren zeichnet sich bei Nutzung für Apotheken-Rezepte durch hohe Erkennungsrate für die Verordnungen (von Rezepten der gesetzlichen Kassen, Privatrezepten, grünen Rezepten, BTM-Rezepten und wirkstoffbasierten Rezepten) und für die im oberen Teil der Rezepte stehenden Daten (Arztdaten wie Betriebsstätten-Nummer, Arztnummer und dergleichen, Versichertendaten wie Name, Geburtsdatum, Adressfelder, Versichertennummer, Kassennummer und dergleichen) sowie durch die Feststellung der Präsenz einer Arztunterschrift über dem Arztstempel aus.

Das Ergebnis für ein einzelnes Rezept kann den Warenwirtschaftslösungen der Apotheken zur weiteren Verarbeitung zur Verfügung gestellt werden. Dabei können die einzelnen relevanten Felder einer Verordnung (Name des Medikamentes, Darreichungsform, Packungsgröße, Stärke,...) ermittelt werden und mit diesen Feldern die Suche in einer Datenbank erfolgen, die alle am Markt verfügbaren Medikamente enthält. Wesentliche Erkennungsergebnisse sind die in Frage kommenden PZNs (Pharmazentralnummern) nebst aller weiteren Merkmale eines Medikaments wie beispielsweise Gültigkeitsdauer und Angabe ob Original oder Reimport sowie weitere bei der Verordnung nicht angegebene Felder wie beispielsweise der Hersteller.

Die Technologie ermöglicht auch grundsätzlich weitere Rezepttypen, wie beispielsweise die bayerischen Stundenbedarfs-Rezepte zu bearbeiten.

Tests an großen Mengen von Rezepten ergeben eine Erkennungsrate für die klassischen gesetzlichen Rezepte für die Verordnungen von über 96 %. Diverse Störeffekte wie handschriftliche Anmerkungen und Korrekturen des Arztes, seine Unterschrift, wiederholte Arztstempel und dergleichen, die weit in das Verordnungsfeld reichen, sowie starke Fehldrucke verhindern die Erreichung einer Erkennungsrate von 100%. Die Erkennungsraten für die einzelnen Arzt- und Versichertenfelder, insbesondere der Arztnummer und der Versichertennummer, lagen überwiegend bei 98 %.

Zusammenfassend lässt sich festhalten, dass im Rahmen des im Ausführungsbeispiel vorgestellten erfindungsgemäßen Verfahrens durch die Kombination mehrerer Technologien für die Erkennung von Dokumenten eine deutliche Verbesserung in der Erkennungsrate gesamter Zeichenstrings ermöglicht wird. Das Verfahren umfasst zunächst unterschiedliche Binarisierungen, wobei aus einen Farbbild unterschiedlich binarisierte schwarz weiß Bilder erzeugt werden. Damit werden auch besonders schwache als auch besonders starke Drucke in der nachfolgenden Verarbeitung nutzbar gemacht. Mit der Binarisierung können gleichzeitig weitgehend Hintergrundfarben sowie Formularränder entfernt werden. Ferner umfasst das Verfahren die Erkennung, wobei durch eine Parallelisierung von Erkennungen auf Basis der unterschiedlich binarisierten schwarz weiß Bilder mehrere Ergebnisse der nachfolgenden Verarbeitung und Optimierung zur Verfügung gestellt werden können. Des Weiteren umfasst das Verfahren eine Zusammenführung der parallel erstellten Ergebnisse, wobei aus den unterschiedlichen Ergebnissen der parallelen Erkennungen domänenspezifisch im Allgemeinen das beste Ergebnis ermittelt werden kann. Letztlich umfasst das Verfahren auch eine korrekte Dokumentenpositionierung, wobei dann, wenn der Einzug der Dokumente am Scanner nicht korrekt erfolgt und ein gestauchtes Image entsteht, das Image durch entsprechende Verfahren bei gleichbleibender Auflösung in die korrekte Größe und Position überführt werden kann.

## Patentansprüche

1. Verfahren zu Erkennung von gedruckten Texten auf Dokumenten und insbesondere auf Rezepten, wobei zunächst eine Rastergraphik des Dokuments erstellt wird,
**dadurch gekennzeichnet,**
**dass** die Rastergraphik zwei- oder mehrfach durch Verwendung unterschiedlicher Sets an Binarisierungsparametern auf unterschiedliche Weise binarisiert wird, um wenigstens zwei unterschiedliche Binärbilder zu erstellen, dass alle Binärbilder separat einer Texterkennung unterzogen und die Ergebnisse auf der Grundlage wenigstens eines Bewertungsparameters bewertet werden und dass auf der Grundlage der Bewertung ein Binärbild ausgewählt wird, auf dessen Grundlage ein Endergebnis erstellt wird.

2. Verfahren nach Anspruch 1, **dadurch gekennzeichnet, dass** die Rastergraphik drei bis fünf und vorzugsweise drei oder vier Mal auf unterschiedliche Weise binarisiert wird, um eine entsprechende Zahl unterschiedlicher Binärbilder zu erstellen.

3. Verfahren nach einem der vorhergehenden Ansprüche, **dadurch gekennzeichnet, dass** die Rastergraphik und/oder das Binärbild mit mindestens 200 dpi, vorzugsweise mit zwischen 250 und 350 dpi und weiter vorzugsweise mit ungefähr 300 dpi erstellt werden.

4. Verfahren nach einem der vorhergehenden Ansprüche, **dadurch gekennzeichnet, dass** die Bewertungsparameter einen oder mehrere der folgenden Parameter umfassen: Anzahl der erkannten Schriftzeichen, Anzahl der nicht lesbaren Zeichen, Zuordnungsgrad erkannter Begriffe, Übereinstimmung korrespondierender Schriftzeichen in den einzelnen Ergebnissen und Übereinstimmung erkannter und gegebenenfalls zugeordneter Begriffe in den einzelnen Ergebnissen.

5. Verfahren nach einem der vorhergehenden Ansprüche, **dadurch gekennzeichnet, dass** nur ein Teilergebnis auf der Grundlage wenigstens eines Bewertungsparameters bewertet wird, wobei das Teilergebnis aus der Texterkennung für lediglich eine Teilfläche der Binärbilder, vorzugsweise für lediglich den Verordnungsteil eines Rezepts erhalten wird, und dass auf dieser Grundlage das Binärbild zur Erstellung des Endergebnisses ausgewählt wird.

6. Verfahren nach einem der vorhergehenden Ansprüche, **dadurch gekennzeichnet, dass** vor den Binarisierungen ein Dokumententyp und vorzugsweise Rezepttyp identifiziert wird und dass die Wahl der für die einzelnen Binarisierungen verwendeten Sets an Binarisierungsparametern zumindest auch auf der Grundlage des identifizierten Dokumententyps erfolgt.

7. Verfahren nach einem der vorhergehenden Ansprüche, **dadurch gekennzeichnet, dass** wenigstens ein und vorzugsweise alle Sets an Binarisierungsparametern so gewählt werden, dass wenigstens eine bestimmte Ebene der Rastergraphik, die einen Anteil an der Darstellung einer bestimmten Farbe in der Rastergraphik hat, bei der Binarisierung nicht berücksichtigt wird.

8. Verfahren nach einem der vorhergehenden Ansprüche, **dadurch gekennzeichnet, dass** vor den Binarisierungen bewertet wird, ob die Rastergraphik Bildabschnitte aufweist, die das Dokument nicht zeigen, und wobei solche Bildabschnitte, sofern vorhanden, vor den Binarisierungen aus der Rastergraphik entfernt werden.

9. Verfahren nach Anspruch 8, **dadurch gekennzeichnet, dass** Bildabschnitte, die das Dokument zeigen, nach Entfernung der anderen Bildabschnitte und vor den Binarisierungen verschoben und/oder gestreckt werden.

10. Vorrichtung zur Erkennung gedruckter Texte auf Dokumenten und insbesondere zur Erkennung von Verordnungen auf Rezepten mit einem optischen Eingabegerät und mit einer Steuereinheit, die ausgebildet ist, ein Verfahren nach einem der vorhergehenden Ansprüche durch zuführen.
